# EUROPÄISCHE PATENTSCHRIFT

(11) **EP 3 822 495 B1**
(45) Veröffentlichungstag und Bekanntmachung des Hinweises auf die Patenterteilung: **06.09.2023**
(21) Anmeldenummer: 20205575.2
(22) Anmeldetag: 04.11.2020
(51) Int. Cl.: F16B 7/18

(54) **BEFESTIGUNGSVORRICHTUNG UND MONTAGEEINHEIT**
FASTENING DEVICE AND FASTENING UNIT
DISPOSITIF DE FIXATION ET UNITÉ DE MONTAGE

(30) Priorität: 15.11.2019 DE 102019130856
(43) Veröffentlichungstag der Anmeldung: 19.05.2021
(73) Patentinhaber: Hettich-Heinze GmbH & Co. KG, 32139 Spenge (DE)
(72) Erfinder: MONTECCHIO, Andreas, 32105 Bad Salzuflen (DE); RAUDE, Matthis, 49186 Bad Iburg (DE)
(74) Vertreter: Dantz, Jan Henning

(56) Entgegenhaltungen:
- EP-A2- 0 805 297

## Beschreibung

Die vorliegende Erfindung betrifft eine Befestigungsvorrichtung zur Fixierung eines Bauteils der Befestigungsvorrichtung an einer Nut eines Profils mit mindestens einer an dem Bauteil drehbar gelagerten Schraube der Befestigungsvorrichtung, die mit einem Gewindeabschnitt in eine Rhombusmutter der Befestigungsvorrichtung eingreift, die zwischen einer Montageposition und einer Demontageposition drehbar ist, wobei mindestens ein Anschlag an dem Bauteil zur Begrenzung der Drehbewegung der Rhombusmutter in der Demontageposition vorgesehen ist, und eine Montageeinheit.

Die DE 20 2010 013 011 U1 offenbart eine Befestigungsanordnung für die Montage von Beschlagteilen an einer T-förmigen Nut, bei der auf die Nut eine Platte aufgesetzt wird, die über einen Nutenstein klemmend fixiert wird. Hierfür ist eine Schraube durch ein Durchgangsloch an der Platte geführt und greift mit einem Gewindeabschnitt in einen Nutenstein ein. Zwischen dem Nutenstein und der Platte ist zusätzlich ein O-Ring vorgesehen, um einen Reibschuss herzustellen und den Nutenstein gegen ein Verdrehen zu sichern. Die so hergestellte Befestigungsanordnung erfordert zahlreiche Bauteile. Der O-Ring zwischen dem Nutenstein und der Platte ist dabei nachteilig, weil kein definierter Abstand zwischen dem Nutenstein und der Platte vorhanden ist, da die Dicke des O-Ringes bei Belastung abnimmt.

EP 0 805 297 offenbart eine Verankerungseinheit zur Befestigung von Rohren.

Es ist daher Aufgabe der vorliegenden Erfindung, eine Befestigungsvorrichtung zur Fixierung eines Bauteils an einer Nut eines Profils zu schaffen, die leicht zu montieren und zu demontieren ist. Zudem soll eine Montageeinheit mit einer solchen Befestigungsvorrichtung bereitgestellt werden.

Diese Aufgabe wird mit einer Befestigungsvorrichtung mit den Merkmalen des Anspruches 1 gelöst.

Erfindungsgemäß ist integral mit dem Bauteil zur Fixierung an einer Nut eines Profils mindestens ein Abstandshalter ausgebildet, der in der Montageposition zwischen einer Rhombusmutter und einer auf die Nutwände der Nut des Profils aufsetzbaren Anlagefläche des Bauteils angeordnet ist. Über den Abstandshalter kann die Rhombusmutter in der Demontageposition in einem vorbestimmten Abstand zu einer Anlagefläche des Bauteils positioniert werden. Dadurch vereinfacht sich die Montage, da die Rhombusmutter nie zu nahe an die Anlagefläche des Bauteils gelangen kann, sondern der Wechsel zwischen Montageposition und Demontageposition in einem vorbestimmten Abstand und somit der Montageablauf vorgegeben ist.

Der mindestens eine Abstandshalter weist vorzugsweise eine Höhe zwischen 1 mm bis 8 mm, insbesondere 1,5 mm bis 4 mm, auf. Die Höhe des Abstandshalters ist vorzugsweise größer als die Dicke eines Haltesteges der Nut an dem Profil, so dass die Rhombusmutter zunächst von der Demontageposition in die Montageposition gedreht werden kann, in der Endabschnitte einen Haltesteg der Nutwände hintergreifen, um dann klemmend an diesen festgelegt zu werden.

Für eine sichere Abstützung der Rhombusmutter kann der mindestens eine Abstandshalter als Rippe oder Steg ausgebildet sein. Vorzugsweise sind zwei gebogene Rippen als Abstandshalter um die Schraube angeordnet, zwischen denen eine Aufnahme zum Einfügen der Rhombusmutter in der Montageposition vorgesehen ist. Dadurch kann die Rhombusmutter in der Montageposition in Richtung der Anlagefläche bewegt werden, wobei aber in der Demontageposition ein vorgegebener Abstand zwischen der Anlagefläche und der Rhombusmutter vorhanden ist.

In einer weiteren Ausgestaltung ist der mindestens eine Abstandshalter mit einem integral mit dem Bauteil ausgebildeten Anschlag verbunden, der die Drehbewegung der Rhombusmutter in der Demontageposition begrenzt. Dadurch kann die Rhombusmutter auf einfache Weise sowohl im Hinblick auf die Drehposition festgelegt werden, als auch im Hinblick auf die Position relativ zu der Anlagefläche des Bauteils. Die Rhombusmutter ist dabei vorzugsweise als zweiarmiger Hebel ausgebildet, wobei die beiden Endabschnitte des Hebels in der Montageposition jeweils einen Haltesteg einer Nut des Profils hintergreifen. Denkbar ist auch eine Anordnung dergestalt, dass lediglich ein Endabschnitt des zweiarmigen Hebels einen Haltesteg einer Nut des Profils hintergreift, ähnlich der Funktionsweise einer Spannpratze oder eines Spanneisens.

Erfindungsgemäß wird auch eine Montageeinheit mit einem Profil mit mindestens einer Nut bereitgestellt, an der eine Befestigungsvorrichtung mit dem Bauteil und der Rhombusmutter fixiert ist. Dabei kann das Bauteil über mindestens zwei voneinander beabstandete Rhombusmuttern klemmend an dem Profil festgelegt sein. Dadurch können auch längliche Bauteile, wie Gehäuse, an der Nut sicher fixiert werden.

Die Nut zur Fixierung des Bauteils weist vorzugsweise zwei Nutwände mit mindestens einem nach innen ragenden Haltesteg auf, der zwischen der Rhombusmutter und der Anlagefläche des Bauteils einklemmbar ist. Die Rhombusmutter kann dabei zwei Kontaktflächen aufweisen, die an einer Innenseite der Nutwand anlegbar sind, so dass in der Montageposition die Drehbewegung der Rhombusmutter über die Nutwände begrenzt wird. Besonders bevorzugt sind hierbei die Kontaktflächen eben ausgebildet.

Vorzugsweise wird bei der Montageeinheit ein Bauteil an dem Profil festgelegt, das als Funktionseinheit eines Schiebetürsystems, vorzugsweise als Gehäuse einer Dämpfungs-, Öffnungs- und/oder Schließeinheit, ausgebildet ist. Eine solche Dämpfungs-, Öffnungs- und/oder Schließeinheit kann einen bewegbaren Mitnehmer aufweisen, der über eine Feder in eine Ausgangsposition vorgespannt ist und eine Tür oder ein anderes bewegbares Möbelteil in eine Ausgangsposition vorspannt. Das Profil kann dann beispielsweise als Laufschiene für einen Schiebetürbeschlag ausgebildet sein, die mindestens eine Laufbahn zum Verfahren einer Rolle eines Laufteils des Schiebetürbeschlages aufweist. Solche Schiebetürbeschläge können an einem Möbelkorpus oder an Trennwänden montiert werden. Aber auch andere Einsatzzwecke der Befestigungsvorrichtung sind möglich.

Die Erfindung wird nachfolgend anhand eines Ausführungsbeispiels mit Bezug auf die beigefügten Zeichnungen näher erläutert. Es zeigen:

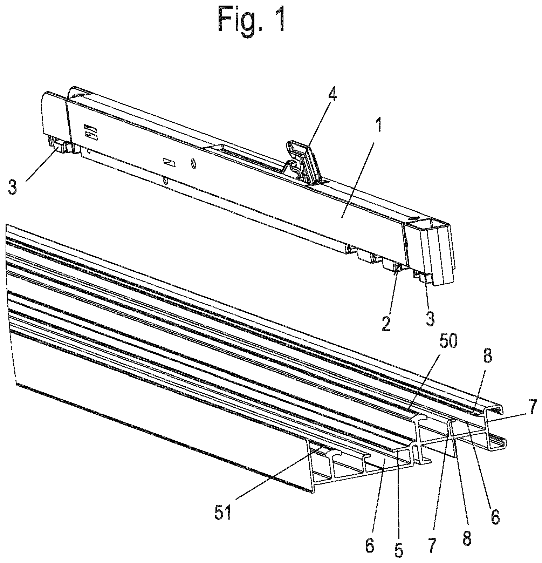

- Figur 1: eine perspektivische Ansicht einer erfindungsgemäßen Befestigungsvorrichtung bei der Montage;
- Figuren 2A bis 2C: mehrere Schnittansichten der Befestigungsvorrichtung der Figur 1 bei der Montage;
- Figuren 3A und 3B: zwei Schnittansichten der Befestigungsvorrichtung der Figur 1 bei der Demontage;
- Figur 4: eine Detailansicht des Bauteils ohne Rhombusmutter;
- Figur 5: eine perspektivische Ansicht des Bauteils mit der Rhombusmutter und der Schraube;
- Figuren 6A und 6B: zwei Ansichten des Bauteils mit der Rhombusmutter in unterschiedlichen Positionen;
- Figur 7: eine Seitenansicht des Bauteils mit der Rhombusmutter;
- Figuren 8A und 8B: zwei Ansichten der Rhombusmutter in der Demontageposition, und
- Figuren 9A bis 9C: mehrere Ansichten des Bauteils mit der Rhombusmutter in der Montageposition.

Eine Befestigungsvorrichtung umfasst ein Bauteil 1, das beispielsweise als Gehäuse einer Schließeinheit ausgebildet ist und an einem Profil 5, beispielsweise einer Laufschiene eines Schiebetürbeschlages, fixiert werden soll. An dem Bauteil 1 ist ein Mitnehmer 4 entlang einer Führungsbahn verfahrbar, der mit einem bewegbaren Möbelteil, beispielsweise einer Schiebetür, koppelbar ist, um diese in eine Ausgangsposition zu ziehen. Das Bauteil 1 umfasst eine dem Profil 5 zugewandte Anlagefläche 2, von der eine oder mehrere Rhombusmuttern 3 hervorstehen.

Das Profil 5 umfasst mindestens eine Nut 6, die Nutwände 7 aufweist, an denen nach innen ragende Haltestege 8 ausgebildet sind. An dem Profil 5 können ferner eine oder mehrere Laufbahnen 50 oder 51 ausgebildet sein, an denen Rollen eines Laufteils eines Schiebetürbeschlages abrollen können. An ein oder mehreren im Querschnitt T-förmigen Nuten 6 ist das Bauteil 1 über die mindestens eine Rhombusmutter 3 fixierbar.

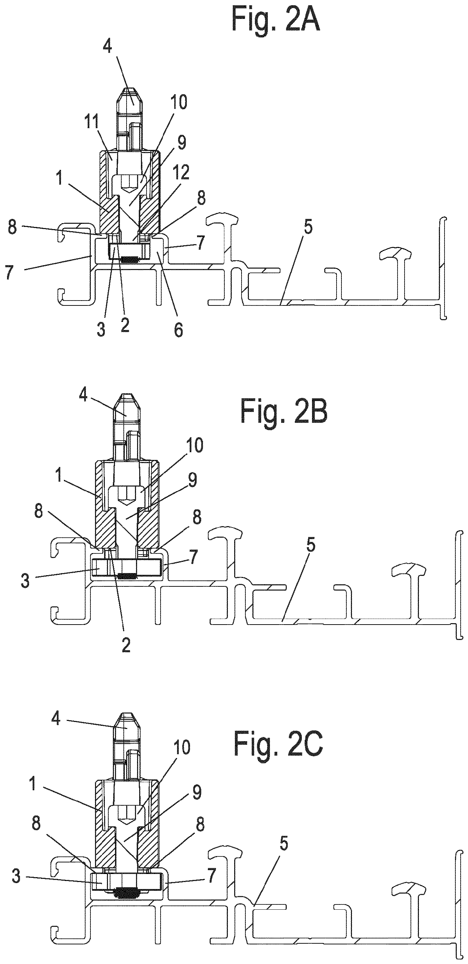

Zur Fixierung des Bauteils 1 an dem Profil 5 wird zunächst die Anlagefläche 2 auf die Haltestege 8 der Nut 6 aufgesetzt, wie dies aus der Schnittansicht der Figur 2A ersichtlich ist. Die Rhombusmutter 3 befindet sich in der Demontageposition und das Bauteil 1 kann in dieser Position von dem Profil 5 abgehoben werden.

An dem Bauteil 1 ist mindestens eine Aufnahme 11 für eine Schraube 9 ausgebildet, die drehbar an dem Bauteil 1 gelagert ist und mit einem Schraubenkopf 10 an der Aufnahme 11 in Axialrichtung abgestützt ist. Die Schraube 9 weist einen Gewindeabschnitt 12 auf, der in ein Innengewinde der Rhombusmutter 3 eingreift. Durch Drehen der Schraube 9 kann auch die Rhombusmutter 3 gedreht werden.

In Figur 2B wurde die Rhombusmutter 3 über die Schraube 9 um 45° bis 90°, vorzugsweise um 60°, gedreht, so dass zwei Endabschnitte der länglichen Rhombusmutter 3 die Haltestege 8 der Nut 6 hintergreifen. Der Abstand zwischen Rhombusmutter 3 und der Anlagefläche 2 des Bauteils 1 ist dabei so groß, dass die Haltestege 8 mit Spiel in dem Zwischenraum aufgenommen sind.

Um das Bauteil 1 an dem Profil 5 zu fixieren, wird die Schraube nun weiter gedreht, wobei die Drehbewegung der Rhombusmutter 3 durch die Innenseite der Nutwände 7 begrenzt ist. Dadurch wird durch Drehen der Schraube 9 die Rhombusmutter 3 axial zu dem Bauteil 1 hin bewegt, bis die Haltestege 8 klemmend zwischen der Rhombusmutter 3 und der Anlagefläche 2 des Bauteils 1 angeordnet sind. Dadurch ist das Bauteil 1 klemmend an dem Profil 5 fixiert.

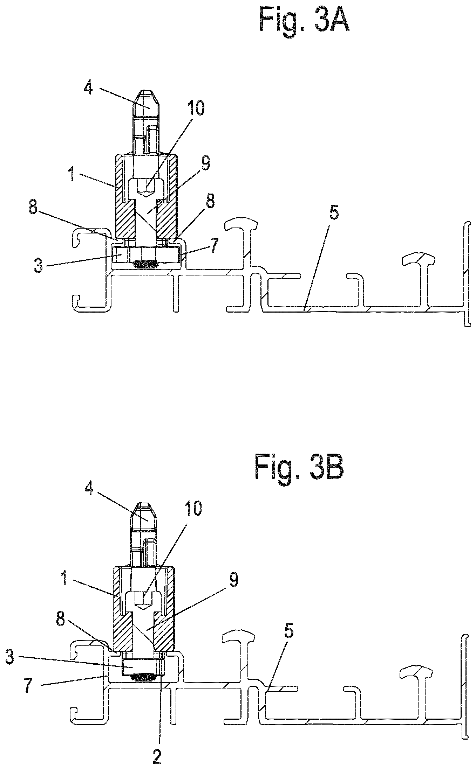

Um die Verbindung zwischen dem Bauteil 1 und dem Profil 5 wieder zu lösen, kann die Schraube wieder in die gegenläufige Richtung gedreht werden, wobei die Rhombusmutter 3 durch einen Anschlag an einer Drehbewegung zunächst gehindert ist, bis ein vorbestimmter Abstand zwischen der Rhombusmutter 3 und dem Bauteil 1 hergestellt ist. In Figur 3A befindet sich die Rhombusmutter 3 noch in der Montageposition, in der ein Abheben des Bauteils 1 verhindert wird. Sobald die Schraube 9 soweit gedreht wurde, dass ein vorbestimmter Abstand zwischen der Rhombusmutter 3 und der Anlagefläche 2 vorhanden ist, kann die Rhombusmutter 3 um 45° bis 90°, vorzugsweise um 60°, zurück in die Demontageposition gedreht werden, wie dies in Figur 3B gezeigt ist. In dieser Position kann das Bauteil 1 mit der Rhombusmutter 3 von dem Profil 5 abgehoben werden.

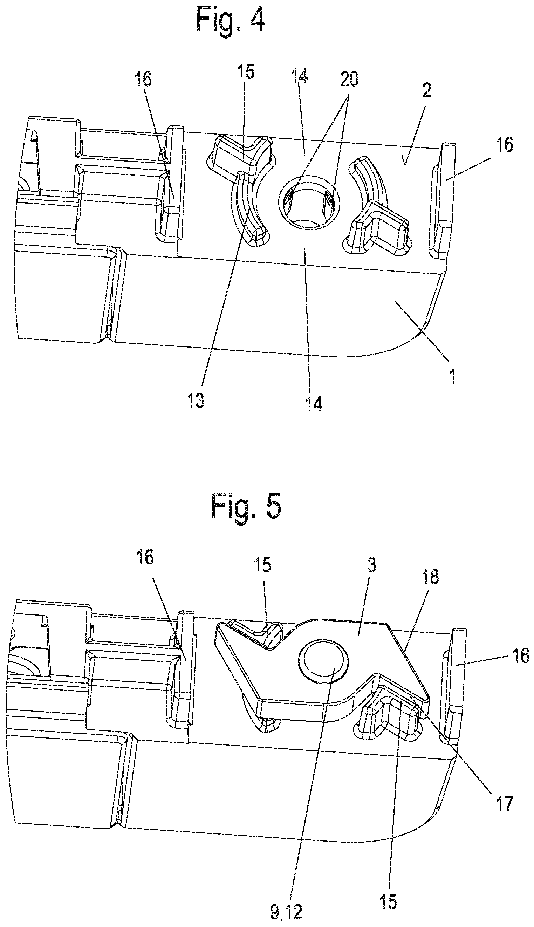

In Figur 4 ist das Bauteil 1 im Bereich der Anlagefläche 2 ohne Rhombusmutter 3 gezeigt. Es ist erkennbar, dass das Bauteil 1 eine im Wesentlichen zylindrische Durchführung für einen zylindrischen Abschnitt der Schraube 9 aufweist, wobei in dem zylindrischen Abschnitt nach innen ragende Vorsprünge 20 ausgebildet sind, die ein unbeabsichtigtes Verdrehen der Schraube 9 mit der Rhombusmutter 3 verhindern. Hierfür ist die Schraube 9 klemmend zwischen den Vorsprüngen 20 gehalten. Vorzugsweise ist die Schraube 9 im Gewindeabschnitt 12 mit einem Sicherungsmittel, besonders bevorzugt mit einem Sicherungslack oder einer Kunststoffbeschichtung, versehen, um eine Verdrehsicherung der Rhombusmutter 3 beim Transport und ein Mitdrehen der Rhombusmutter 3 beim Montage- und Demontagevorgang zu gewährleisten. Konzentrisch zu der Durchführung für die Schraube 9 sind zwei Abstandshalter 13 vorgesehen, die als gebogene Rippen ausgebildet sind, aber auch eine andere Form besitzen können. Die Abstandshalter 13 befinden sich im Bereich der Demontageposition der Rhombusmutter 3 und auf der Anlagefläche 2. Die Abstandshalter 13 sind dabei integral mit dem Bauteil 1 ausgebildet, das beispielsweise aus Kunststoff oder Metall hergestellt ist.

Zwischen den beiden Abstandshaltern 13 ist jeweils eine Aufnahme 14 ausgebildet, in die die Rhombusmutter 3 in der Montageposition einfügbar ist. Die Aufnahme 14 ist dabei durch einen Abschnitt der Anlagefläche 2 gebildet und kann die Rhombusmutter 3 nahezu verdrehsicher aufnehmen, damit diese für die Montage nahe an die Anlagefläche 2 bewegt werden kann.

An mindestens einem Abstandshalter 13 ist ein Anschlag 15 angeformt, der eine Drehbewegung der Rhombusmutter 3 in der Demontageposition begrenzt. Dadurch kann die Rhombusmutter 3 zwischen der Demontageposition und der Montageposition in einem gewünschten Wirkbereich verschwenkt werden.

An dem Bauteil 1 ist ferner mindestens ein integral ausgebildeter Wandabschnitt 16 vorgesehen, der in die Nut 6 zwischen den beiden Haltestegen 8 eingreift und somit das Bauteil 1 relativ zu dem Profil 5 ausrichtet.

In Figur 5 ist das Bauteil 1 mit der Rhombusmutter 3 gezeigt, die von einem Gewindeabschnitt 12 der Schraube 9 durchgriffen ist. Die Rhombusmutter 3 weist mindestens eine Anlagefläche 17 auf, die in der Demontageposition an dem Anschlag 15 anliegt, der in dem dargestellten Ausführungsbeispiel winkelförmig ausgebildet ist, wobei auch andere Formen für den Anschlag 15 möglich sind.

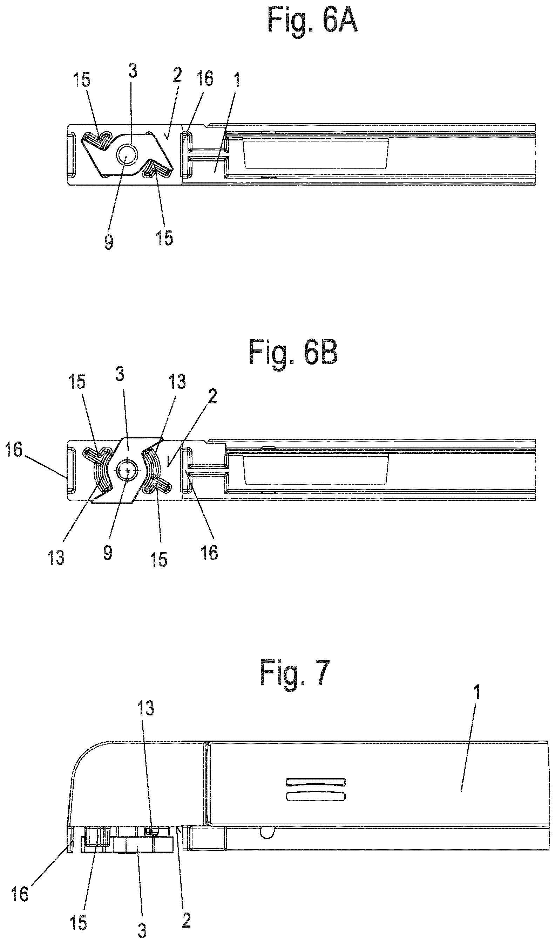

In Figur 6A befindet sich die Rhombusmutter 3 an dem Bauteil 1 in der Demontageposition, und die Abstandshalter 13, verdeckt unterhalb der Rhombusmutter 13 liegend, sorgen für einen vorbestimmten Abstand zwischen der Rhombusmutter 3 und der Anlagefläche 2 an dem Bauteil 1. Wird die Rhombusmutter 3 über die Schraube 9 gedreht, kann die in Figur 6B gezeigte Montageposition erreicht werden, in der die Rhombusmutter 3 sich in Richtung der Anlagefläche 2 bewegen kann, um die Haltestege 8 zwischen der Anlagefläche 2 und der Rhombusmutter 3 klemmend zu fixieren. In dieser Position liegt die Rhombusmutter 3 in der Aufnahme 14 zwischen den beiden Abstandshaltern 13. Eine Drehbewegung der Rhombusmutter 3 in die Demontageposition ist erst möglich, wenn die Rhombusmutter 3 über die Schraube 9 axial wieder weg von der Anlagefläche 2 bewegt wird, bis die Abstandshalter 13 von der Rhombusmutter 3 wieder übergriffen werden können.

In Figur 7 ist eine Seitenansicht gezeigt, in der sichtbar ist, dass der Anschlag 15 weiter von der Anlagefläche 2 hervorsteht als die Abstandshalter 13.

Dadurch wird die Drehbewegung der Rhombusmutter 3 in der Demontageposition begrenzt.

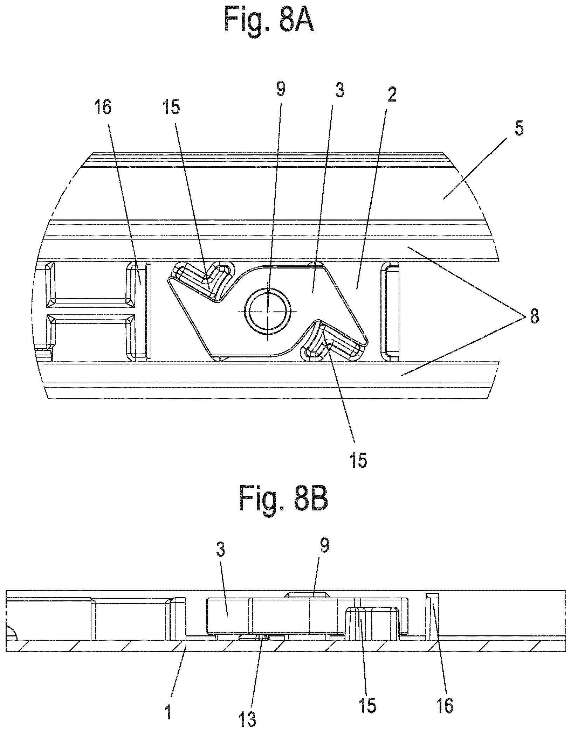

In Figur 8A ist das Bauteil 1 mit der Rhombusmutter 3 in der Demontageposition gezeigt, wobei die Haltestege 8 an dem Profil sichtbar sind. In der Demontageposition liegt die Rhombusmutter 3 zwischen den beiden Haltestegen 8 und kann daher in die Nut 6 eingefügt werden. Auch die Wandabschnitte 16 an dem Bauteil 1 besitzen eine Breite, die geringer ist als der Abstand der Haltestege 8 zueinander, so dass diese in die Nut 6 einfügbar sind. In Figur 8B ist gezeigt, dass die Abstandshalter 13 die Rhombusmutter 3 in einem vorbestimmten Abstand zu der Anlagefläche 2 des Bauteils positionieren.

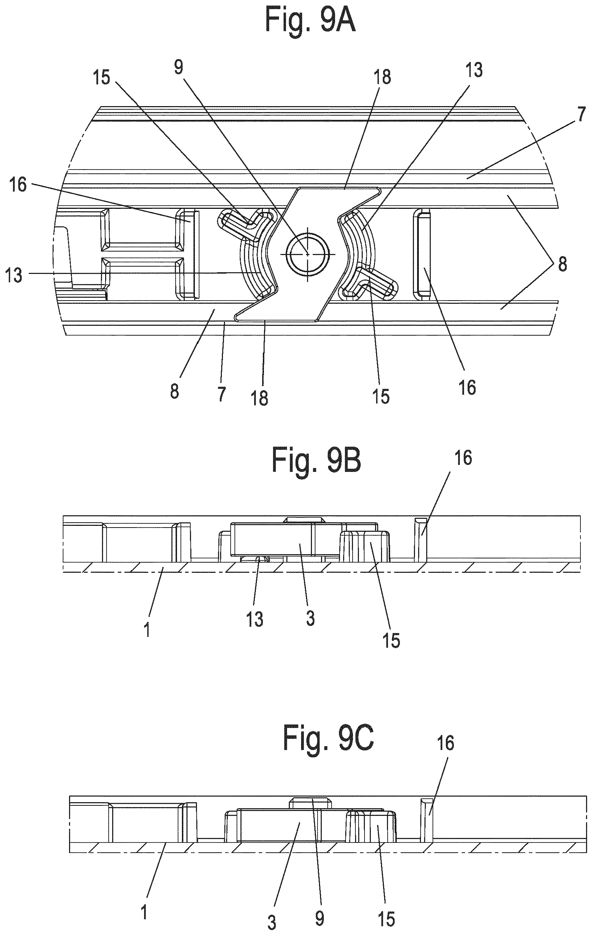

In Figur 9A wurde die Rhombusmutter 3 um ca 60° in die Montageposition gedreht, so dass zwei vorzugsweise ebene Kontaktflächen 18 nun an einer Innenseite der beiden Nutwände 7 anliegen. Dadurch ist die Drehbewegung der Rhombusmutter 3 in der Montageposition begrenzt. In der dazugehörigen Seitenansicht in Figur 9B ist gezeigt, dass dabei die Rhombusmutter 3 zunächst in einem Abstand von dem Bauteil 1 angeordnetist. Um die Rhombusmutter 3 nun klemmend an den Haltestegen 8 anzuordnen, wird die Schraube 9 weiter gedreht, bis die Rhombusmutter 3 klemmend an den beiden Haltestegen 8 anliegt, um das Bauteil 1 an dem Profil 5 zu fixieren, wie in Figur 9C gezeigt.

### Bezugszeichenliste

- 1: Bauteil
- 2: Anlagefläche
- 3: Rhombusmutter
- 4: Mitnehmer
- 5: Profil
- 6: Nut
- 7: Nutwand
- 8: Haltesteg
- 9: Schraube
- 10: Schraubenkopf
- 11: Aufnahme
- 12: Gewindeabschnitt
- 13: Abstandshalter
- 14: Aufnahme
- 15: Anschlag
- 16: Wandabschnitt
- 17: Anlagefläche
- 18: Kontaktfläche
- 20: Vorsprung
- 50: Laufbahn
- 51: Laufbahn

## Patentansprüche

1. Befestigungsvorrichtung zur Fixierung eines Bauteils (1) der Befestigungsvorrichtung an einer Nut (6) eines Profils (5) mit mindestens einer an dem Bauteil (1) drehbar gelagerten Schraube (9) der Befestigungsvorrichtung, die mit einem Gewindeabschnitt (12) in eine Rhombusmutter (3) der Befestigungsvorrichtung eingreift, die zwischen einer Montageposition und einer Demontageposition drehbar ist, **dadurch gekennzeichnet, dass** mindestens ein Anschlag (15) an dem Bauteil (1) zur Begrenzung der Drehbewegung der Rhombusmutter (3) in der Demontageposition vorgesehen ist, wobei mit dem Bauteil (1) mindestens ein Abstandshalter (13) ausgebildet ist, der in der Demontageposition zwischen der Rhombusmutter (3) und einer auf die Nutwände (7) der Nut (6) ansetzbaren Anlagefläche (2) des Bauteils (1) angeordnet ist.

2. Befestigungsvorrichtung nach Anspruch 1, **dadurch gekennzeichnet, dass** der mindestens eine Abstandshalter (13) eine Höhe zwischen 1 mm bis 8 mm, insbesondere zwischen 1,5 mm bis 4 mm, aufweist.

3. Befestigungsvorrichtung nach Anspruch 1 oder 2, **dadurch gekennzeichnet, dass** der mindestens eine Abstandshalter (13) als Rippe ausgebildet ist.

4. Befestigungsvorrichtung nach Anspruch 3, **dadurch gekennzeichnet, dass** zwei gebogene Rippen als Abstandshalter (13) um die Schraube (9) vorgesehen sind, zwischen denen jeweils eine Aufnahme (14) zum Einfügen der Rhombusmutter (3) in der Montageposition vorgesehen ist.

5. Befestigungsvorrichtung nach einem der vorhergehenden Ansprüche, **dadurch gekennzeichnet, dass** der mindestens eine Abstandshalter (13) mit einem integral mit dem Bauteil (1) ausgebildeten Anschlag (15) verbunden ist.

6. Befestigungsvorrichtung nach einem der vorhergehenden Ansprüche, **dadurch gekennzeichnet, dass** die Rhombusmutter (3) als zweiarmiger Hebel ausgebildet ist und die beiden Endabschnitte des Hebels in der Montageposition jeweils einen Haltesteg (8) an einer Nutwand (7) hintergreifen.

7. Montageeinheit mit einem Profil (5) mit mindestens einer Nut (6), an der eine Befestigungsvorrichtung nach einem der vorhergehenden Ansprüche festgelegt ist.

8. Montageeinheit nach Anspruch 7, **dadurch gekennzeichnet, dass** das Bauteil (1) über mindestens zwei voneinander beabstandete Rhombusmuttern (3) klemmend an dem Profil (5) festgelegt ist.

9. Montageeinheit nach Anspruch 7 oder 8, **dadurch gekennzeichnet, dass** die Nut (6) zwei Nutwände (7) mit mindestens einem nach innen ragenden Haltesteg (8) aufweist, der zwischen der Rhombusmutter (3) und der Anlagefläche (2) eingeklemmt ist.

10. Montageeinheit nach einem der Ansprüche 7 bis 9, **dadurch gekennzeichnet, dass** die Rhombusmutter (3) zwei vorzugsweise ebene Kontaktflächen (18) aufweist, die an einer Innenseite einer Nutwand (7) anlegbar sind.

11. Montageeinheit nach einem der Ansprüche 7 bis 10, **dadurch gekennzeichnet, dass** das Bauteil (1) eine Funktionseinheit eines Schiebetürsystems, vorzugsweise als Gehäuse einer Dämpfungs-, Öffnungs- und/oder Schließeinheit ausgebildet ist.

12. Montageeinheit nach einem der Ansprüche 7 bis 11, **dadurch gekennzeichnet, dass** das Profil (5) als Laufschiene für einen Schiebetürbeschlag ausgebildet ist, das mindestens eine Laufbahn (50, 51) zum Verfahren einer Rolle eines Laufteils des Schiebetürbeschlages aufweist.

## Claims

1. A fastening device for fixing a component (1) of the fastening device on a groove (6) of a profile (5) having at least one screw (9) of the fastening device rotatably mounted on the component (1), which engages with a threaded section (12) in a rhomboid nut (3) of the fastening device, which is rotatable between an assembly position and a disassembly position, **characterized in that** at least one stop (15) is provided on the component (1) for limiting the rotational movement of the rhomboid nut (3) in the disassembly position, wherein at least one spacer (13) is integrally formed with the component (1), which in the disassembly position is arranged between the rhomboid nut (3) and a support surface (2) of the component (1) which can be placed on the groove walls (7) of the groove (6).

2. The fastening device according to Claim 1, **characterized in that** the at least one spacer (13) comprises a height between 1 mm to 8 mm, in particular between 1.5 mm to 4 mm.

3. The fastening device according to Claim 1 or 2, **characterized in that** the at least one spacer (13) is formed as a rib.

4. The fastening device according to Claim 3, **characterized in that** two curved ribs are provided as spacers (13) around the screw (9), between which in each case a receptacle (14) is provided for the insertion of the rhomboid nut (3) in the assembly position.

5. The fastening device according to any one of the preceding claims, **characterized in that** the at least one spacer (13) is connected to a stop (15) integrally formed with the component (1).

6. The fastening device according to any one of the preceding claims, **characterized in that** the rhomboid nut (3) is formed as a two-armed lever and the two end sections of the lever each engage behind a retaining web (8) on a groove wall (7) in the assembly position.

7. An assembly unit having a profile (5) having at least one groove (6), on which a fastening device according to any one of the preceding claims is fixed.

8. The assembly unit according to Claim 7, **characterized in that** the component (1) is fixed on the profile (5) in a clamping manner via at least two rhomboid nuts (3) spaced apart from one another.

9. The assembly unit according to Claim 7 or 8, **characterized in that** the groove (6) comprises two groove walls (7) having at least one inwardly protruding retaining web (8), which is clamped between the rhomboid nut (3) and the support surface (2).

10. The assembly unit according to any one of Claims 7 to 9, **characterized in that** the rhomboid nut (3) comprises two preferably flat support surfaces (18), which are applicable to an inner side of a groove wall (7).

11. The assembly unit according to any one of Claims 7 to 10, **characterized in that** the component (1) is a functional unit of a sliding door system, and is preferably formed as a housing of a damping, opening, and/or closing unit.

12. The assembly unit according to any one of Claims 7 to 11, **characterized in that** the profile (5) is formed as a running rail for a sliding door fitting, which has at least one running track (50, 51) for moving a roller of a runner of the sliding door fitting.

## Revendications

1. Dispositif de fixation pour la fixation d'un composant (1) du dispositif de fixation sur une rainure (6) d'un profilé (5) avec au moins une vis (9) du dispositif de fixation logée de manière rotative sur le composant (1), qui s'engage avec une section filetée (12) dans un écrou rhombique (3) du dispositif de fixation, qui peut être tourné entre une position de montage et une position de démontage, **caractérisé en ce qu'**au moins une butée (15) est prévue sur le composant (1) pour limiter le mouvement de rotation de l'écrou rhombique (3) dans la position de démontage, au moins une entretoise (13) étant formée d'un seul tenant avec le composant (1), laquelle est disposée dans la position de démontage entre l'écrou rhombique (3) et une surface d'appui (2) du composant (1) pouvant être appliquée sur les parois rainurées (7) de la rainure (6).

2. Dispositif de fixation selon la revendication 1, **caractérisé en ce que** l'au moins une entretoise (13) présente une hauteur comprise entre 1 mm et 8 mm, en particulier entre 1,5 mm et 4 mm.

3. Dispositif de fixation selon la revendication 1 ou 2, **caractérisé en ce que** l'au moins une entretoise (13) est conçue comme une nervure.

4. Dispositif de fixation selon la revendication 3, **caractérisé en ce que** deux nervures incurvées sont prévues comme entretoises (13) autour de la vis (9), entre chacune desquelles est prévu un logement (14) pour l'insertion de l'écrou rhombique (3) dans la position de montage.

5. Dispositif de fixation selon l'une quelconque des revendications précédentes, **caractérisé en ce que** ladite au moins une entretoise (13) est reliée à une butée (15) formée d'un seul tenant avec le composant (1).

6. Dispositif de fixation selon l'une quelconque des revendications précédentes, **caractérisé en ce que** l'écrou rhombique (3) est réalisé sous la forme d'un levier à deux bras et **en ce que** les deux sections d'extrémité du levier s'engagent chacune derrière une barre de retenue (8) sur une paroi rainurée (7) dans la position de montage.

7. Unité de montage comprenant un profilé (5) avec au moins une rainure (6) sur laquelle est fixé un dispositif de fixation selon l'une quelconque des revendications précédentes.

8. Unité de montage selon la revendication 7, **caractérisée en ce que** le composant (1) est fixé par serrage sur le profilé (5) par l'intermédiaire d'au moins deux écrous rhombiques (3) espacés l'un de l'autre.

9. Unité de montage selon la revendication 7 ou 8, **caractérisée en ce que** la rainure (6) présente deux parois rainurées (7) avec au moins une barre de retenue (8) dépassant vers l'intérieur, qui est serrée entre l'écrou rhombique (3) et la surface d'appui (2).

10. Unité de montage selon l'une quelconque des revendications 7 à 9, **caractérisée en ce que** l'écrou rhombique (3) présente deux surfaces de contact (18), de préférence planes, qui peuvent être appliquées contre une face intérieure d'une paroi rainurée (7).

11. Unité de montage selon l'une quelconque des revendications 7 à 10, **caractérisée en ce que** le composant (1) est une unité fonctionnelle d'un système de porte coulissante, de préférence sous la forme d'un boîtier d'une unité d'amortissement, d'ouverture et/ou de fermeture.

12. Unité de montage selon l'une quelconque des revendications 7 à 11, **caractérisée en ce que** le profilé (5) est conçu comme un rail de roulement pour une ferrure de porte coulissante, qui présente au moins une surface de roulement (50, 51) pour le déplacement d'un rouleau d'une partie de roulement de la ferrure de porte coulissante.
